# NEUE EUROPÄISCHE PATENTSCHRIFT

(11) **EP 0 100 444 B2**
(45) Veröffentlichungstag und Bekanntmachung des Hinweises auf die Entscheidung über den Einspruch: **30.06.1993**
(45) Hinweis auf die Patenterteilung: 26.03.1986
(21) Anmeldenummer: 83106412.6
(22) Anmeldetag: 01.07.1983
(51) Int. Cl.: C09D 11/10, C08F 212/06

(54) **Verwendung von carboxylgruppenhaltigen Copolymerisaten als Druckfarbenbindemittel für wässerige Druckfarben**
Use of binders based on carboxyl-containing copolymers in aqueous printing inks
Utiliastion des liants, à base de copolymérisats à groupes carboxyle, dans des encres d'impression aqueuses

(30) Priorität: 10.07.1982 DE 3225876
(43) Veröffentlichungstag der Anmeldung: 15.02.1984
(73) Patentinhaber: BASF Aktiengesellschaft, 67063 Ludwigshafen (DE)
(72) Erfinder: Hambrecht, Juergen, Dr., D-6900 Heidelberg (DE); Muench, Volker, Dr., D-6700 Ludwigshafen (DE); Bankowsky, Heinz-Hilmar, D-6710 Frankenthal (DE); Wistuba, Eckehardt, Dr., D-6702 Bad Duerkheim (DE)

(56) Entgegenhaltungen:
- EP-A- 0 047 889
- DE-A- 2 345 814
- DE-A- 2 502 172
- DE-A- 2 658 857
- DE-A- 3 026 831
- GB-A- 1 079 603
- Paul Nylén, Edward Sunderland, Modern Surface Coatings, Interscience Publishers London, New York, Sydney (1965), pp.29-32

## Beschreibung

Die Erfindung betrifft die Verwendung von carboxylgruppenhaltigen Copolymerisaten, die durch Polymerisation eines Monomerengemisches aus Vinylaromaten und monoolefinisch ungesättigten Carbonsäuren erhältlich sind als Bindemittel für wäßrige Druckfarben zum Bedrucken von Papier, Kunststoff- und Metall-folien.

Wäßrige Druckfarben finden hauptsächlich beim Bedrucken von Papier und Wellpappe Verwendung. Erhöhte Anforderungen an die Luftreinhaltung haben zu einem steigenden Bedarf an wäßrigen Druckfarben auch für nicht saugfähige Druckträger geführt.

Bisher wurden als gebräuchliche Bindemittel für diese Art von Druckfarben Maleinatharze, saure Polyesterharze und Acrylatharzlösungen verwendet, wie sie z. B. in den DE-OS 24 21 826; US-PS 4166 811 sowie JP-OS 53 083 809 beschrieben sind. Nachteilig bei den bisher bekannten und auf dem Markt befindlichen Produkten ist die oftmals mangelhafte Haftfestigkeit auf vorbehandelten Polyolefinfolien, Cellglas, Aluminium und Polyesterfolien, der niedrige Glanz der Drucke und die häufig auftretenden Inhomogenitäten, die das äußere Erscheinungsbild der Drucke stören, sowie die unbefriedigende Lagerstabilität und Chargenkonstanz und die damit zusammenhängenden Schwankungen in der Viskosität der Druckfarben, die die Verarbeitung erschweren. Ferner benötigen diese Bindemittel nicht unerehebliche Mengen an organischen Lösemitteln, um überhaupt die Löslichkeit in alkalischen wäßrigen Medien zu gewährleisten.

Aufgabe der Erfindung war es deshalb, Druckfarbenbindemittel aufzuzeigen, die die obigen Nachteile nicht aufweisen. Darüber hinaus sollten diese Bindemittel im schwach alkalischen Bereich löslich und wasserverdünnbarsein. Ebenso sollte die Bindemittellösung auch bei einem nurgeringen Anteil an wassermischbaren organischen Lösungsmitteln eine niedrige Viskosität aufweisen. Die mit dem Bindemittel hergestellten Druckfarben sollten ferner eine gute Pigmentverträglichkeit, Viskositätsstabilität nach Lagerung, Geruchsneutralität und eine gute Verdruckbarkeit zeigen. Wesentliche Bedeutung kommt außerdem der Naßwischfestigkeit nach dem Trocknen der Druckfarbe und der Haftfestigkeit auf dem Substrat zu. Ferner sollte eine absolute Chargenkonstanz der wäßrigen Druckfarben gewährleistet sein.

Dieses Ziel wird überraschenderweise mit den erfindungsgemäß verwendeten Bindemitteln erreicht. Wesentlich für die erfindungsgemäßen Eigenschaften des sauren Harzes sind das zahlenmäßige Verhältnis der Comonomereinheiten, das Molekulargewicht, die Herstellung durch eine kontinuierliche Massepolymerisation und insbesondere der Uneinheitlichkeitsfaktor bezüglich des Molekulargewichts U = M_{w}/Mₙ - 1 Z 2.

Gegenstand dervorliegenden Erfindung ist die Verwendung carboxylgruppenhaltiger Copolymerisate, die durch Zusatz von Basen wasserverdünnbar und aus einem Monomerengemisch aus
A. 25 bis 50 Gew.% mindestens einer a,ß-olefinisch ungesättigten, 3 bis 5 Kohlenstoffatome enthaltenden Monocarbonsäure, die gegebenenfalls teilweise durch a,ß-olefinisch ungesättigte Dicarbonsäuren, deren Anhydride und/oder Halbester ersetzt sein kann,
B. 50 bis 75 Gew.% mindestens eines Vinylaromaten
C. 0 bis 10 Gew.% eines oder mehreren in Wasser nicht oder nur geringfügig löslichen copolymerisierbaren acrylisch ungesättigten Monomeren,

mit der Maßgabe, daß die Summe der unter (A) bis (C) genannten Prozentzahlen 100 ist, durch kontinuierliche Massepolymerisation bei Verweilzeiten von < 30 Minuten und Temperaturen von 200 bis 400 °C in Abwesenheit von radikalliefernden Polymerisationsinitiatoren und Reglern hergestellt worden sind und ein mittleres Molekulargewicht Mₙ von 400 bis 4 000 aufweisen, die dadurch gekennzeichnet sind, daß das carboxylgruppenhaltige Copolymerisat einen Uneinheitlichkeitsfaktor bezüglich des Molekulargewichts U = M_{w}/Mₙ - 1 Z 2 aufweist. Gegenstand der vorliegenden Erfindung ist außerdem die Verwendung der Druckfarbenbindemittel für wäßrige Druckfarben zum Bedrucken von Papier, Kunststoff- und Metallfolien.

Aus der DE-OS-25 02 172 sind Harze bekannt, die u. a. durch thermische Copolymerisation - also ohne radikalbildende Initiatoren - von 2 bis 25 Gew.% Acrylsäure, Styrol und Maleinsäureanhydrid bei ca. 150 bis 300 °C erhalten werden. Diese Harze sind schwer oder überhaupt nicht alkalilöslich und werden gemäß der genannten Publikation als Papierleimungsmittel empfohlen. Sie eignen sich jedoch nicht als Harzkomponente für die Bindemittellösung wäßriger Druckfarben, da sie eine zu geringe Wasserlöslichkeit und Haftfestigkeit auf nicht saugfähigen Druckträgern aufweisen.

In der DE-AS-1519 201 und GB-PS-11 07 249 werden alkalilösliche Harze beschrieben, die sich aus Styrol und (Meth)acrylsäure als Comonomere aufbauen und als alkalilösliche Harze für Polymerdispersionen eingesetzt werden. Diese Harzkomponenten werden durch Lösungspolymerisation in Gegenwart von radikalbildenden Initiatoren und Reglern in diskontinuierlicher Fahrweise erhalten. Der Nachteil solcher Harze ist, daß sie als Bindemittel in wäßrigen Druckfarben eine zu geringe Haftung auf Polymer- und Metallfolien ergeben, so daß die Naßwischfestigkeit der Druckfarben zu wünschen übrig läßt. In diesen Patentschriften findet sich dementsprechend auch kein Hinweis auf die Verwendung dieser Harze als Bindemittel für wäßrige Druckfarben.

Die erfindungsgemäß verwendeten sauren Harze weisen jedoch diese Nachteile nicht auf. Es ist überraschend, daß im Hinblick auf das diskontinuierlich hergestellte Harz der DE-AS-1519 201 durch kontinuierliche, rein thermisch ausgeführte Massepolymerisation bei Temperaturen von 200 bis 400 °C und niedrigen Verweilzeiten Produkte mit an sich ähnlichem Aufbau, aber für die Verwendung als Bindemittel in wäßrigen Druckfarben wesentlich verbesserten Eigenschaften insbesondere bezüglich der Haftfestigkeit auf nichtsaugfähigen Druckträgern, der Naßwischfestigkeit und der Lagerstabilität, erhalten werden.

Darüber hinaus wurde überraschenderweise gefunden, daß die verwendeten Bindemittelharze bei der Verarbeitung der damit hergestellten wäßrigen Druckfarben zu glänzenden Drucken mit makelloser Oberfläche führen.

Zu den Aufbaukomponenten, ist im einzelnen folgendes auszuführen :
A. Als a,ß-olefinisch ungesättigte, 3 bis 5 Kohlenstoffatome enthaltende Monocarbonsäuren kommen beispielsweise Acrylsäüre und Methacrylsäure in Frage. Die Monocarbonsäuren können teilweise, bis zu 50, vorzugsweise bis zu 25 Gewichtsprozent durch a,ß-olefinisch ungesättigte Dicarbonsäuren, wie z. B. Maleinsäure, Fumarsäure, deren Anhydride, wie z. B. Maleinsäureanhydrid und/oder Halbester, wie z. B. Maleinsäure- oder Fumarsäurehalbester von 1 bis 8 Kohlenstoffatome enthaltenden Alkoholen ersetzt sein.
   Komponente (A) ist im Monomerengemisch im allgemeinen in einer Menge von 25 bis 50, vorzugsweise 30 bis 45 Gewichtsprozent, bezogen auf die Gesamtmenge der Monomeren (A) + (B) + (C) enthalten, bzw. im Copolymerisat einpolymerisiert.
B. Als Vinylaromaten kommen in Frage Styrol, Vinyltoluol, a-Methylstyrol oder höher substituierte Styrole, wie z. B. 2,4-Dimethylstyrol. Bevorzugt sind Styrol, Vinyltoluol und a-Methylstyrol.
   Komponente (B) ist im Monomeren-Gemisch im ellgemeinen in einer Menge von 50 bis 75, vorzugsweise 55 bis 70 Gewichtsprozent, bezogen auf die Gesamtmenge der Monomeren (A) + (B) + (C) enthalten, bzw. im Copolymerisat einpolymerisiert.
C. Als weitere in Wasser nicht oder nur geringfügig lösliche copolymerisierbare acrylisch ungesättigte Monomeren kommen in Frage Ester der Acrylsäure oder Methacrylsäure mit 1 bis 8, vorzugsweise 1 bis 4 Kohlenstoffatome enthaltenden Monoalkanolen, die gegegebenenfalls Äthergruppen enthalten können.

Nitrile, wie z. B. Acrylnitril oder Methacrylnitril, Amide, wie Acrylamid oder Maleinsäure- oder Fumarsäuredialkylestervon 1 bis 8 C-Atome enthaltenden Alkoholen. Bevorzugte Monomere (C) sind z. B. n-Butylacrylat, Methylmethacrylat und/oder Acrylnitril.

Diese Monomeren (C) können im Monomergemisch bis zu 10, vorzugsweise 2 bis 7 Gewichtsprozent, bezogen auf die Gesamtmenge der Monomeren (A) + (B) + (C) enthalten sein, bzw. im Copolymerisat einpolymerisiert sein.

Bevorzugt sind Copolymerisate, die Acrylsäure und/oder Methacrylsäure als Komponente (A) und Styrol und/oder Vinyltoluol als Komponente (B) einpolymerisiert enthalten, wobei die Komponente (A) auch Maleinsäure- oder Fumarsäureinheiten enthalten kann.

Die Copolymerisation wird kontinuierlich bei Temperaturen zwischen 200 und 400, vorzugsweise zwischen 220 und 380 °C und in Abwesenheit von radikalbildenden Initiatoren und Reglern durchgeführt. Ein Copolymerisat aus Styrol, Acrylsäure kann beispielsweise dadurch hergestellt werden, daß man die Monomeren einem Reaktor oder zwei hintereinandergeschalteten Polymerisationszonen, beispielsweise einer Druckkesselkaskade, kontinuierlich zuführt und nach einer Verweilzeit von 3 bis 30, vorzugsweise 5 bis 25 Min. bei Temperaturen zwischen 200 und 400 °C kontinuierlich aus der Reaktionszone ausschleust. Die Einhaltung dieser Temperaturgrenzen ist wichtig, da bei Unterschreiten die Verweilzeiten zu lang und die Molgewichte zu hoch werden, und bei Überschreitung thermische Zersetzungsprozesse eintreten können.

Als Polymerisationsapparatur kann z. B. ein Druckkessel, eine Druckkesselkaskade, ein Druckrohr oder auch ein Druckkessel mit einem nachgeschalteten Reaktionsrohr, das mit einem statischen Mischer versehen ist, verwendet werden. Vorzugsweise polymerisiert man das Monomerengemisch (A) + (B) + gegebenenfalls (C) in mindestens zwei hintereinandergeschalteten Polymerisationszonen. Dabei kann die eine Reaktionszone aus einem druckdichten Kessel, die andere aus einem druckdichten Reaktionsrohr, vorzugsweise einem beheizbaren statischen Mischer bestehen. Wenn man die Polymerisation in zwei hintereinandergeschalteten Zonen durchführt, erhält man Umsätze, die oberhalb 99 % liegen. Während der Polymerisation muß für eine gute Durchmischung der Komponenten gesorgt werden, beispielsweise verwendet man druckdichte Kessel, die mit einem Rührer ausgestattet sind, oder Polymerisationsrohre mit statischen Mischern.

Die Polymerisation kann bei Drücken von > 1 bar, vorzugsweise zwischen 1 und 200 bar durchgeführt werden. Besonders gute Ergebnisse erhält man, wenn man die Polymerisationsreaktion bei periodischen Druckschwankungen mit Druckdifferenzen zwischen 5 und 120 bar durchführt und anschließend ebenfalls bei periodischen Druckschwankungen mit denselben Druckdifferenzen entspannt. Diese Maßnahme, die eine pulsierende Strömung des Reaktionsgutes zur Folge hat, bewirkt eine Selbstreinigung des Reaktors und verhindert produktschädigende Wandbeläge und Anbackungen im Reaktor. Der Produktaustrag ist homogen und enthält keine Stippen oder vercracktes Material.

Unter kontinuierlicher Polymerisation im Sinne der vorliegenden Erfindung soll auch eine Arbeitsweise verstanden werden, bei der in einer Polymerisationszone, z. B. in einem Kessel, zunächst etwa 10 % der Monomeren-Mischung vorgelegt wird und bei der man dann anschließend den Rest der Monomeren-Mischung kontinuierlich im Verlauf von 10 bis 30 Min. zulaufen läßt. Bei dieser Verfahrensvariante liegen jedoch die Raumzeitausbeuten nicht so hoch wie bei dem kontinuierlichen Polymerisieren in zwei hintereinandergeschalteten Reaktionszonen. Im Gegensatz zu den bekannten Verfahren wird vorzugsweise in Abwesenheit eines Lösungsmittels polymerisiert. Bei entsprechender Wahl der Monomerenzusammensetzung und der Einsatzmenge an Monomeren pro Zeiteinheit, reicht die bei der Polymerisation freiwerdende Wärmemenge aus, um die für die Polymerisation erforderliche Temperatur aufrechtzuerhalten. Gelegentlich kann es jedoch erforderlich sein, die Reaktionszone zu beheizen bzw. zu kühlen. In Abhängigkeit von der Polymerisationstemperatur und der Verweilzeit der Reaktionsmischung in der Polymerisationszone erhält man Umsätze an Monomeren, die oberhalb von 99, vorzugsweise mehr als 99,5 % betragen. Die nach dem erfindungsgemäßen Verfahren hergestellten Copolymerisate enthalten daher nur noch so geringe Mengen unumgesetzter Monomerer, daß es in aller Regel nicht erforderlich ist, die restlichen geringen Mengen an Monomeren aus dem Polymerisat zu entfernen.

Sollte es jedoch zur völligen Vermeidung von Geruchsbelästigungen notwendig sein, noch enthaltene flüchtige Bestandteile zu entfernen, so kann das Polymerisat im Vakuum entgast werden. Hierzu werden bekannte Verdampfungs-aggregate, wie Rohrverdampfer, Plattenverdampfer oder Filmtruder eingesetzt. In der Regel ist ein solcher Entgasungsschritt für die Herstellung der erfindungsgemäßen Polymerisate jedoch nicht notwendig.

Das Molekulargewicht der erfindungsgemäß verwendeten Copolymerisate beträgt 400 bis 4 000, vorzugsweise 500 bis 2 000. Es kann einerseits über die Polymerisationstemperatur, andererseits über die Verweilzeit gesteuert werden.

Das Copolymerisat kann aus der Polymerisationsapparatur kontinuierlich z. B. über ein Entspannungsgefäß mit nachgeschaltetem Austragsaggregat oder vorzugsweise pulsierend ausgetragen werden. Beim Einsatz gekühlter Transportbänder erhält man somit dünnwandiges Festprodukt, das sich aufgrund der großen Oberfläche in alkalischem Medium schnell auflöst. Für viele Anwendungen ist es zweckmäßig, das Copolymerisat in teil neutralisierter zumindest aber in gelöster Form einzusetzen. Die Carboxylgruppen des Copolymerisates werden daher in diesen Fällen im Anschluß an die Polymerisation mit Basen teilweise, bzw. bis zu 100 % neutralisiert.

Geeignete Basen sind beispielsweise gasförmiges Ammoniak, wäßrige Ammoniaklösungen oder wäßrige Lösungen anderer Basen wie Natronlauge, Kalilauge, Erdalkalihydroxide, wie Magnesiumhydroxid und Calciumhydroxid oder Amine, wie Monoalkylamine, Dialkylamine und Trialkylamine oder Mischungen der Amine sowie Alkanolamine, wie z. B. Dimethylethanolamin. Bei der Neutralisation wird in der Regel so verfahren, daß Copolymerisatlösungen anfallen, die einen Feststoffgehalt zwischen 10 und 40 Gew.% aufweisen. Die wäßrigen, teil- odervollständig neutralisierten Copolymerisatlösungen können durch Zugabe von Wasser leicht verdünnt werden. Die wäßrige Lösung kann gegebenenfalls auch noch bis zu 10 Gew.% eines Alkanols mit 1-4 C-Atomen enthalten. Beispiele für solche Alkanole sind Methanol, Ethanol, iso-Propanol und n-Butanol ; bevorzugt eingesetzt wird iso-Propanol.

Die Lösung der Bindemittelharze kann jedoch auch direkt im Anschluß an die Copolymerisation kontinuierlich durchgeführt werden. Die aus dem Reaktor kommende heiße Polymerisatschmelze wird dann bei Temperaturen von 80 bis 200 °C, Drücken oberhalb 1 bar und Verweilzeiten von 5 bis 30 Minuten gelöst. Als Lösungsapparaturen können z. B. Druckkessel, Druckrohre, die ggf. Mischorgane eingebaut enthalten oder auch Kombinationen von Druckkesseln und Druckrohren verwendet werden. Vorzugsweise werden Kombinationen von Druckrohren benutzt, die mindestens teilweise mit Mischorganen ausgestattet sind. Diese Organe können Stäbe oder Siebplatten sein.

Vorzugsweise verwendet man solche Mischorgane, die die Reaktionsmasse bei möglichst geringem Strömungswiderstand in verschiedene Ströme zerteilen und unter Veränderung der Strömungsrichtung wieder zusammenführen. Beispiele für solche Mischelemente sind statische Mischer. Der Inhalt des Reaktorsystems ist im allgemeinen so bemessen, daß bei der gegebenen Verweilzeit von 5 bis 30 Minuten ebenfalls hohe Raum-Zeit-Ausbeuten, z. B. in dem Bereich von 1 bis 50 kg Copolymerisat pro Liter und Stunde erzielt werden. Das teilneutralisierte bzw. vollständig neutralisierte Copolymerisat wird in der bevorzugten Ausführungsform des Verfahrens aus der Polymerisationsvorrichtung unter pulsierender Entspannung ausgetragen. Der Druck beim Lösevorgang beträgt mehr als 1 bar und liegt vorzugsweise in dem Bereich von 5 bis 120 bar.

Die wäßrigen Druckfarben enthalten im allgemeinen eine Bindemittellösung die aufgebaut ist aus
15-30 Gew. Teile Bindemittel
5- 8 Gew. Teile konz. Ammoniak
0-10 Gew. Teile Alkohol
80-52 Gew. Teile Wasser

Lösungen dieser Konzentration und Zusammensetzung weisen eine Auslaufzeit von 10-30 Sekunden im Auslaufbecher nach DIN 53 211 auf.

Die hergestellten Bindemittel ergeben Druckfarben gleichbleibenderQualität, hinsichtlich der Lagerbeständigkeit, Glanzgebung, Haftfestigkeit, Verhalten auf der Druckmaschine und insbesondere Naßwischfestigkeit und Geruchsneutralität. Sie eignen sich außer für den Flexodruck auch für wäßrigen Tiefdruck.

Die Pigmente, die zur Herstellung der Druckfarben verwendet werden, können aus den üblichen Pigmenten ausgewählt werden, die für Tiefdruck- oder Flexodruckfarben brauchbar sind.

Zur Verbesserung der Reibbeständigkeit eines aus dem erfindungsgemäßen Bindemittel hergestellten Druckfilms können der Druckfarbe zusätzlich noch mikrokristallines Wachs, Polyethylenwachs u. U. als wäßrige Dispersion, oder auch andere für Druckfarben übliche Modifizierungsmittel zugesetzt werden.

Die Bindemittellösungen werden den wäßrigen Druckfarben im allgemeinen zu 40-90 Gew.%, vorzugsweise 45-80 Gew.% zugesetzt. Die Mischung mit Pigmentpräparationen oder das Anreiben mit anorganischen und organischen Pigmenten kann mit den üblichen Misch- bzw. Anreibeaggregaten durchgeführt werden. Besonders vorteilhaft ist, wenn man Pigmente verwendet, die in einem besonderen Finishprozeß für die Dispergierung in wäßrigen Medien ausgerüstet wurden oder wäßrige Pigmentpräparationen.

Die in den Beispielen genannten Teile und Prozente beziehen sich auf das Gewicht.

### I. Herstellung der Druckfarbenbindemittel :

### Beispiel 1

### Bindemittelharz X₁

60 Teile Styrol und 40 Teile Acrylsäure wurden in einen 1 000 Teile fassenden Druckkessel mit nachgeschaltetem Druckrohr doppelten Rauminhalts mit Druckregler kontinuierlich zudosiert. Das System wurde auf 310°C erhitzt. Der Druck wurde im Bereich zwischen 5 und 50 bar gehalten und einmal innerhalb einer Minute durch eine periodische Druckregelung in diesem Bereich variiert. Die Verweilzeit betrug 11 Min. ; die Copolymerschmelze wurde mengenmäßig in dem Maße ausgefahren, wie frische Monomerenmischung zugefahren wurde. Das Copolymerisat wies ein mittleres Molekulargewicht Mₙ von 650 und eine Molekulargewichtsuneinheitlichkeit U = M_{w}/Mₙ - 1 von 1,5 auf.

### Beispiel 2

### Bindemittelharz X₂

70 Teile Styrol und 30 Teile Acrylsäure wurden gemäß Beispiel 1 copolymerisiert. Die Temperatur betrug 290 °C, die Verweilzeit 15 Minuten und der Druck zwischen 5 und 60 bar.

Das erhaltene Copolymerisatwies ein mittleres Molekulargewicht Mₙ von 870 und eine Molekulargewichtsuneinheitlichkeit von U = M_{w}/Mₙ - 1 von 1,8 auf.

### Beispiel 3

### Bindemittelharz X₃

60 Teile Styrol, 34 Teile Acrylsäure und 6 Teile Methylacrylat wurden gemäß Beispiel 1 copolymerisiert. Die Temperatur betrug 300 °C, der Druck 10 bis 80 bar und die Verweilzeit 9 Minuten.

Das erhaltene Copolymerisat wies ein mittleres Molgewicht Mₙ von 620 und eine Molekulargewichtsuneinheitlichkeit U = M_{w}/Mₙ - 1 = 2,0 auf.

### Beispiel 4

### Bindemittelharz X₄

60 Teile Styrol, 35 Teile Acrylsäure und 5 Teile Maleinsäureanhydrid wurden gemäß Beispiel 1 polymerisiert. Die Temperatur lag bei 280 °C, der Druck betrug 20-60 bar, die Verweilzeit 10 Minuten.

Das erhaltene Bindemittelharz X₄ wies ein mittleres Molekulargewicht von Mₙ von 1 070 auf und besaß eine Molekulargewichtsuneinheitlichkeit von 2,0.

### Vergleichsbeispiel

### Vergleichsbindemittel X_{A}

Gemäß Beispiel 1 der GB-PS-11 07 249 wurde ein Styrol-Acrylsäure-Harz mit 30 Gew.% Acrylsäure und einem Molekulargewicht Mₙ von 1900 hergestellt. Die Molekulargewichtsuneinheitlichkeit betrug U = MwlMn-1 > 2.

Es wurden unterschiedlich zusammengesetzte wäßrige Druckfarben für den Flexodruck und den wäßrigen Tiefdruck nachfolgender Rezeptur hergestellt und vergleichend geprüft:
20 Gew.% einer wäßrigen Pigmentpräparation

wurden mit 80 Gew.% einer Bindemittellösung bei Raumtemperatur durch Rühren vermischt. Die Bindemittellösung war aufgebaut aus:
20 Gew. Teilen eines Bindemittelharzes Xₙ
7 Gew. Teilen konzentriertem Ammoniak
7 Gew. Teilen iso-Propanol und
66 Gew. Teilen Wasser

Als Bindemittelharz Xₙ wurden die gemäß Beispiele 1 bis 4 und Vergleichsbeispiel hergestellten Bindemittelharze eingesetzt.

Zur anwendungstechnischen Prüfung werden die Druckfarben mit einer 12 µ Rakel auf die verschiedenen Substrate aufgetragen. Die Trocknung erfolgt in der Wärme, um eine möglichst vollständige Verdunstung der flüchtigen Anteile zu erreichen. Die Bestimmung der Wasserfestigkeit kann nach DIN 16 524 erfolgen oder durch Bestimmung der sog. Naßreibfestigkeit. Bei dieser Methode wird ein feuchtes Vlies unter Belastung von ca. 1 kg/cm² über den Druck gezogen. Die Beurteilung der Ergebnisse erfolgt optisch durch den Vergleich der unterschiedlich angefärbten Vliese nach dem Graumaßstab gemäß DIN 54 002. Die mit den erfindungsgemäßen Druckfarbenbindemitteln hergestellten Druckfarben erreichen bei diesem Test die Stufe 4 während herkömmliche Harze aus der Klasse der gesättigten Polyesterharze und Maleinatharze nur die Stufe 3 erreichen.

Die Haftfestigkeit der Drucke wird auf durch Coronaentladung vorbehandelter Polyethylenfolie, die eine Mindestoberflächenspannung von 38 dyn/cm aufweisen soll, geprüft. Die Prüfung erfolgt nach dem sogenannten « Tesaabrißtest ». Im Vergleich zu den herkömmlichen Harzen aus der Klasse der gesättigten Polyester, der Maleinatharze und der Acrylatharze ergeben die erfindungsgemäßen Harze eine gute Haftfestigkeit auf Polyethylen. Haftfestigkeit ist auch auf Zellglas- und Aluminiumfolien gegeben.

Die Auslaufzeiten der Druckfarben liegen bei etwa 16 bis 22 Sekunden im DIN-Becher mit 4 mm Düse. Nach einer Lagerung der Druckfarben bei 50 °C über 3 Tage steigt die Viskosität nicht an. Harze der herkömmlichen Art neigen zum Ansteigen der Viskosität. Dieser Viskositätsanstieg ist ein bedeutender Nachteil der herkömmlichen Bindemittel, da auf den Druckmaschinen nur Druckfarben verarbeitet werden können, die eine niedrige Viskosität aufweisen.

## Patentansprüche

1. Verwendung von carboxylgruppenhaltigen Copolymerisaten (a), welche
(a₁) durch Zusatz von Basen wasserverdünnbar sind und welche
(a₂) aus einem Monomerengemisch aus, bezogen auf das Monomerengemisch,
(A) 25 bis 50 Gew.% mindestens einer a,ß-olefinisch ungesättigten, 3 bis 5 Kohlenstoffatome enthaltenden Monocarbonsäure, die gegebenenfalls teilweise durch a,ß-olefinisch ungesättigte Dicarbonsäuren, deren Anhydride und/oder Halbester ersetzt sein kann,
(B) 50 bis 75 Gew.% mindestens eines Vinylaromaten und
(C) 0 bis 10 Gew.% eines oder mehreren in Wasser nicht oder nur geringfügig löslichen copolymerisierbaren acrylisch ungesättigten Monomeren
(D) durch kontinuierliche Massepolymerisation bei Verweilzeiten von < 10 Minuten und Temperaturen von 200 bis 400°C in Abwesenheit von radikalliefernden Polymerisationsinitiatoren und Reglern hergestellt worden sind und welche
(E) ein mittleres Molekulargewicht Mₙ von 400 bis 4000 und
(F) einen Uneinheitlichkeitsfaktor bezüglich des Molekulargewichts U = M_{w}/Mₙ - 1 Z 2 aufweisen, als Druckfarbenbindemittel.

2. Verwendung von carboxylgruppenhaltigen Copolymerisaten (a), welche
(a₁) durch Zusatz von Basen wasserverdünnbar sind und welche
(a₂) aus einem Monomerengemisch aus, bezogen auf das Monomerengemisch,
(A) 25 bis 50 Gew.% mindestens einer a,ß-olefinisch ungesättigten, 3 bis 5 Kohlenstoffatome enthaltenden Monocarbonsäure, die gegebenenfalls teilweise durch a,ß-olefinisch ungesättigte Dicarbonsäuren, deren Anhydride und/oder Halbester ersetzt sein kann,
(B) 50 bis 75 Gew.% mindestens eines Vinylaromaten und
(C) 0 bis 10 Gew.% eines oder mehreren in Wasser nicht oder nur geringfügig löslichen copolymerisierbaren acrylisch ungesättigten Monomeren
(D) durch kontinuierliche Massepolymerisation bei Verweilzeiten von < 10 Minuten und Temperaturen von 200 bis 400°C in Abwesenheit von radikallierfernden Polymerisationsinitiatoren und Reglern hergestellt worden sind und welche
(E) ein mittleres Molekulargewicht Mₙ von 400 bis 4000 und
(F) einen Uneinheitlichkeitsfaktor bezüglich des Molekulargewichts U = M_{w}/Mₙ - 1 Z 2 aufweisen, für die Herstellung wäßriger Druckfarbenbindemittellösungen.

3. Verwendung von carboxylgruppenhaltigen Copolymerisaten (a), welche
(a₁) durch Zusatz von Basen wasserverdünnbar sind und welche
(a₂) aus einem Monomerengemisch aus, bezogen auf das Monomerengemisch,
(A) 25 bis 50 Gew.% mindestens einer a,ß-olefinisch ungesättigten, 3 bis 5 Kohlenstoffatome enthaltenden Monocarbonsäure, die gegebenenfalls teilweise durch a,ß-olefinisch ungesättigte Dicarbonsäuren, deren Anhydride und/oder Halbester ersetzt sein kann,
(B) 50 bis 75 Gew.% mindestens eines Vinylaromaten und
(C) 0 bis 10 Gew.% eines oder mehreren in Wasser nicht oder nur geringfügig löslichen copolymerisierbaren acrylisch ungesättigten Monomeren
(D) durch kontinuierliche Massepolymerisation bei Verweilzeiten von < 10 Minuten und Temperaturen von 200 bis 400°C in Abwesenheit von radikalliefernden Polymerisations initiatoren und Reglern hergestellt worden sind und welche
(E) ein mittleres Molekulargewicht Mₙ von 400 bis 4000 und
(F) einen Uneinheitlichkeitsfaktor bezüglich des Molekulargewichts U = M_{w}/Mₙ - 1 Z 2 aufweisen, als Druckfarbenbindemittel für wäßrige Druckfarben zum Bedrucken von Papier, Kunststoff- und Metall- folien.

## Claims

1. Use of a carboxyl-containing copolymer (a) which
(a₁) is water-dilutable as a result of adding bases and which
(a₂) has been prepared from a monomer mixture of, based on the monomer mixture,
(A) from 25 to 50% by weight of at least one α,β-olefinically unsaturated monocarboxylic acid which contains 3 to 5 carbon atoms and some of which may be replaced by a,ß-olefinically unsaturated dicarboxylic acids or anhydrides or half-esters thereof,
(B) from 50 to 75% by weight of at least one vinylaromatic and
(C) from 0 to 10% by weight of one or more copolymerizable acrylically unsaturated monomers which are insoluble or only slightly soluble in water,
(D) by continuous mass polymerization during a residence time of < 10 minutes and at from 200 to 400°C in the absence of free radical polymerization initiators and regulators, and which have
(E) an average molecular weight Mₙ of from 400 to 4,000 and
(F) a molecular weight nonuniformity factor U = M_{w}/Mₙ - 1 Z 2,
as a printing ink binder.

2. Use of a carboxyl-containing copolymer (a) which
(a₁) is water-dilutable as a result of adding bases and which
(a₂) has been prepared from a monomer mixture of, based on the monomer mixture,
(A) from 25 to 50% by weight of at least one α,β-olefinically unsaturated monocarboxylic acid which contains 3 to 5 carbon atoms and some of which may be replaced by a,ß-olefinically unsaturated dicarboxylic acids or anhydrides or half-esters thereof,
(B) from 50 to 75% by weight of at least one vinylaromatic and
(C) from 0 to 10% by weight of one or more copolymerizable acrylically unsaturated monomers which are insoluble or only slightly soluble in water,
(D) by continuous mass polymerization during a residence time of < 10 minutes and at from 200 to 400°C in the absence of free radical polymerization initiators and regulators, and which have
(E) an average molecular weight Mₙ of from 400 to 4,000 and
(F) a molecular weight nonuniformity factor U = Mw/Mn - 1 ≧ 2,
for the preparation of aqueous printing ink binder solutions.

3. Use of a carboxyl-containing copolymer (a) which
(a₁) is water-dilutable as a result of adding bases and which
(a₂) has been prepared from a monomer mixture of, based on the monomer mixture,
(A) from 25 to 50% by weight of at least one α,β-olefinically unsaturated monocarboxylic acid which contains 3 to 5 carbon atoms and some of which may be replaced by a,ß-olefinically unsaturated dicarboxylic acids or anhydrides or half-esters thereof,
(B) from 50 to 75% by weight of at least one vinylaromatic and
(C) from 0 to 10% by weight of one or more copolymerizable acrylically unsaturated monomers which are insoluble or only slightly soluble in water,
(D) by continuous mass polymerization during a residence time of < 10 minutes and at from 200 to 400°C in the absence of free radical polymerization initiators and regulators, and which have
(E) an average molecular weight Mₙ of from 400 to 4,000 and
(F) a molecular weight nonuniformity factor U = M_{w}/Mₙ - 1 ≤ 2,
as a printing ink binder for aqueous printing inks for printing paper, plastics films and metal foils.

## Revendications

1. Emploi comme liant d'encre d'imprimerie de copolymères (a) comprenant des groupes carboxyle, lesquels copolymères
a₁) peuvent être dilués dans l'eau par addition de bases et lesquels,
a₂) à partir d'un mélange de monomères constitué, relativement au mélange de monomères, de
A) 25 à 50 % en poids d'au minimum un acide a,ß-oléfinique mono-carboxylique insaturé contenant 3 à 5 atomes de carbone, que l'on peut remplacer en partie, le cas échéant, par des acides α,β-oléfiniques di-carboxyliques insaturés, par leurs anhydrides et/ou leurs hémi-esters,
B) 50 à 75 % en poids d'au minimum un composé vinyl-aromatique et
C) 0 à 10 % en poids d'un ou plusieurs monomères acryliques insaturés copolymérisables non solubles dans l'eau ou seulement faiblement solubles,
D) ont été, en tant que liants pour encres d'imprimerie, synthétisés en continu par polymérisation en masse suivant un temps de séjour inférieur à 10 minutes et sous des températures allant de 200 à 400°C en l'absence d'initiateurs et de régulateurs de polymérisation formant des radicaux et lesquels
E) présentent un poids moléculaire moyen Mₙ allant de 400 à 4000 et
F) un facteur d'hétérogénéité U = M_{w}/Mₙ - 1 Z 2 par rapport au poids moléculaire.

2. Emploi pour la préparation de solutions aqueuses de liant pour encre d'imprimerie de copolymères (a) comprenant des groupes carboxyle, lesquels copolymères
aᵢ) peuvent être dilués dans l'eau par addition de bases et lesquels,
a₁) à partir d'un mélange de monomères constitué, relativement au mélange de monomères, de
A) 25 à 50 % en poids d'au minimum un acide a,ß-oléfinique mono-carboxylique insaturé contenant 3 à 5 atomes de carbone, que l'on peut remplacer en partie, le cas échéant, par des acides α,β-oléfiniques di-carboxyliques insaturés, par leurs anhydrides et/ou leurs hémi-esters,
B) 50 à 75 % en poids d'au minimum un composé vinyl-aromatique et
C) 0 à 10 % en poids d'un ou plusieurs monomères acryliques insaturés copolymérisables non solubles dans l'eau ou seulement faiblement solubles,
D) ont été, pour la fabrication de liants pour encres d'imprimerie sous forme de solutions aqueuses, synthétisés en continu par polymérisation en masse suivant un temps de séjour inférieur à 10 minutes et sous des températures allant de 200 à 400°C en l'absence d'initiateurs et de régulateurs de polymérisation formant des radicaux et lesquels
E) présentent un poids moléculaire moyen Mₙ allant de 400 à 4000 et
F) un facteur d'hétérogénéité U = M_{w}/Mₙ = 1 ≤ 2 par rapport au poids moléculaire.

3. Emploi, comme liant pour encre d'imprimerie, de solutions aqueuses, desitnées à l'impression sur papier, feuilles de matière plastique et de métal, de copolymères (a) comprenant des groupes carboxyle, lesquels copolymères
a₁) peuvent être dilués dans l'eau par addition de bases et lesquels,
a₂) à partir d'un mélange de monomères constitué, relativement au mélange de monomères, de
A) 25 à 50 % en poids d'au minimum un acide a,ß-oléfinique mono-carboxylique insaturé contenant 3 à 5 atomes de carbone, que l'on peut remplacer en partie, le cas échéant, par des acides α,β-oléfiniques di-carboxyliques insaturés, par leurs anhydrides et/ou leurs hémi-esters,
B) 50 à 75 % en poids d'au minimum un composé vinyl-aromatique et
C) 0 à 10 % en poids d'un ou plusieurs monomères acryliques insaturés copolymérisables non solubles dans l'eau ou seulement faiblement solubles,
D) ont été, en tant que liants pour encres d'imprimerie employés dans les encres d'imprimerie délayées pour l'impression sur papier, sur feuilles de matières plastiques et sur feuilles métalliques, synthétisés en continu par polymérisation en masse suivant un temps de séjour inférieur à 10 minutes et sous des températures allant de 200 à 400°C en l'absence d'initiateurs et de régulateurs de polymérisation formant des radicaux et lesquels
E) présentent un poids moléculaire moyen Mₙ allant de 400 à 4000 et
F) un facteur d'hétérogénéité U = M_{w}/Mₙ - 1 Z 2 par rapport au poids moléculaire.
